# EUROPEAN PATENT SPECIFICATION

(11) **EP 3 521 109 B1**
(45) Date of publication and mention of the grant of the patent: **30.09.2020**
(21) Application number: 19154753.8
(22) Date of filing: 31.01.2019
(51) Int. Cl.: B60R 21/207

(54) **SIDE AIRBAG APPARATUS**
SEITENAIRBAGVORRICHTUNG
APPAREIL DE COUSSIN DE SÉCURITÉ GONFLABLE LATÉRAL

(30) Priority: 06.02.2018 JP 2018019423
(43) Date of publication of application: 07.08.2019
(73) Proprietor: Autoliv Development AB, 447 83 Vårgårda (SE)
(72) Inventor: Kobayashi, Yuto, Yokohama-shi Kanagawa 222-8580 (JP); Nogami, Mitsuo, Yokohama-shi Kanagawa 222-8580 (JP)
(74) Representative: Müller Verweyen

(56) References cited:
- DE-U1-202016 005 581
- JP-A- 2012 140 044
- US-A1- 2009 020 988

## Description

### BACKGROUND OF THE INVENTION

The present invention relates to a side airbag apparatus provided in a vehicle seat.

Airbag apparatuses are a standard feature in most vehicles today. An airbag apparatus is a safety apparatus that is activated in an emergency such as a vehicle collision and catches and protects an occupant by inflating and deploying an airbag cushion (simply referred to as "cushion," hereinafter) using gas pressure.

There exist several types of airbag apparatuses tailored to various installation locations and applications. For example, a front airbag apparatus is provided in the center of a steering wheel in order to protect an occupant from frontal and rear impacts. In addition, in order to protect the occupant from an impact in a vehicle width direction upon a side collision and the like, a curtain airbag apparatus is provided in the vicinity of a ceiling above a side window, and a side airbag apparatus is provided on the side of a seat.

Various innovations to improve the ability to protect occupants have been introduced to airbag apparatuses provided by various companies. A side airbag apparatus described in Japanese Patent Application Laid-open No. 2009-23494, for example, has an airbag cushion partitioned into two sections, a main airbag 50 and an auxiliary airbag 60, and configured to inflate the auxiliary airbag 60 first. According to Japanese Patent Application Laid-open No. 2009-23494, the auxiliary airbag 60 moves an occupant toward the inside of the vehicle to some degree to secure a space for allowing the main airbag 50 to inflate, thus enabling reliable inflation of the main airbag 50 and improvement of protection performance of the airbag cushion.

(Patent document 1) Japanese Patent Application laid-open No. 2009-23494.

To this day, side airbag apparatuses are required to further improve occupant protection performance and occupant restraining force of the airbag cushions. Examples of measures to improve the occupant protection performance and the like include securing a part functioning as a support of some sort for an airbag cushion. However, as shown in FIG. 4 and the like of Japanese Patent Application Laid-open No. 2009-23494, the airbag cushion of the side airbag apparatus is provided at the edge of a seat back of a vehicle seat, and in many cases the side opposite to the occupant only has a soft member made of urethane material or the like. Document DE 20 2016 005 581 U1 discloses a side airbag apparatus according to the preamble of claim 1.

Furthermore, Regulation 21 of the United Nations Economic Commission for Europe (UN/ECE vehicle regulations), which is an international standard for vehicle safety and the environment, sets up provisions concerning interior protrusions of a passenger compartment. According to this Regulation 21, for the purpose of preventing an increase and the like of risks of injury to an occupant, the interior protrusions must not have sharp edges made of a rigid material. In view of such a regulation, the configurations of the interior protrusions of side airbag apparatuses, too, need to be reexamined in order to realize safer vehicles.

The present invention was contrived in view of the foregoing circumstances, and an object thereof is to provide a side airbag apparatus not only capable of improvement in occupant protection performance and occupant restraining force, but also designed with careful thought for safety of a passenger compartment.

To achieve the foregoing object, a typical configuration of the side airbag apparatus according to the present invention is defined by the features of claim 1.

According to this configuration, since the airbag cushion is disposed in the center of the side frame of the vehicle seat, the airbag cushion can easily receive a reaction force from the side frame when restraining the occupant. In addition, the interference prevention member can prevent the occupant and other structures from coming into contact with the tip of the stud bolt, thereby enhancing the safety of a passenger compartment.

The interference prevention member may be installed to cover the tip of the stud bolt. With this configuration, the tip of the stud bolt can be made rounded, enhancing the safety of the passenger compartment.

The side airbag apparatus according to the present invention includes a designated holding plate attached to the side frame together with the airbag cushion and the inflator. The holding plate includes a base part formed between the airbag cushion and the side frame, and an extended part extending outward in the width direction from the base part in front of the side frame and further extending in a forward direction. The interference prevention member is provided behind the stud bolt in the side frame.

According to this configuration, the holding plate provides a reaction force to the airbag cushion so that the airbag cushion can be inflated and deployed more smoothly, thereby improving the occupant protection performance. Also, according to this configuration, the presence of the extended part of the holding plate and the interference prevention member in front of and behind the stud bolt can prevent other structures and the like from coming into contact with the tip of the stud bolt, thereby enhancing the safety of the passenger compartment.

According to the invention, the extended part of the holding plate extends outward in the width direction and protrude beyond the stud bolt. According to this configuration, the extended part of the holding plate and the interference prevention member protrude outward beyond the stud bolt, efficiently preventing other structures and the like from coming into contact with the tip of the stud bolt.

The interference prevention member may be installed in the base part of the holding plate and pass through the side frame. Such a configuration can favorably implement the interference prevention member.

The interference prevention member may include a plurality of protrusions formed along a vertical direction of the side frame. The interference prevention member having this configuration can efficiently prevent other structures and the like from coming into contact with the tip of the stud bolt.

The holding plate may be larger in size than the airbag cushion in the stored state, in the vertical direction of the side frame. The holding plate having this configuration can efficiently support the airbag cushion from the beginning of inflation and deployment thereof.

It is preferred that the interference prevention member be formed of a resin. This configuration can realize an interference prevention member having low rigidity.

The side airbag apparatus may further include a cover that releasably covers at least a part of the airbag cushion which is in the stored state, the cover being formed of a heat welded fabric. With this cover, the airbag cushion can efficiently be retained in its stored state.

The present invention can provide a side airbag apparatus not only capable of improvement in occupant protection performance and occupant restraining force, but also designed with careful thought for safety of a passenger compartment.

FIG. 1A and FIG. 1B are diagrams showing a side airbag apparatus according to a first embodiment of the present invention;
FIG. 2A and FIG. 2B are diagrams showing, from a side of a vehicle seat, a cushion in respective states shown in FIG. 1A and FIG. 1B;
FIG. 3A and FIG. 3B are perspective views showing respective states of the side airbag apparatus of FIG. 2B;
FIG. 4 is a cross-sectional view taken long A-A of the cushion in a stored state shown in FIG. 2B;
FIG. 5A to FIG. 5C are diagrams showing a process of inflating and deploying the cushion of FIG. 4;
FIG. 6A and FIG. 6B are diagrams showing a side airbag apparatus according to a second embodiment of the present invention; and
FIG. 7 is a cross-sectional view taken along B-B of the side airbag apparatus of FIG. 6A.

Preferred embodiments of the present invention are described hereinafter with reference to the accompanying drawings. Sizes, materials, and other specific values described in the embodiments are merely illustrative for the purpose of facilitating understanding of the present invention and are not intended to limit the present invention unless otherwise specified. It should be noted, in the present specification and the drawings, that elements with substantially the same functions and configurations are denoted by the same reference numerals, to omit redundant explanations, and that elements not directly related to the present invention are not illustrated.

### First Embodiment

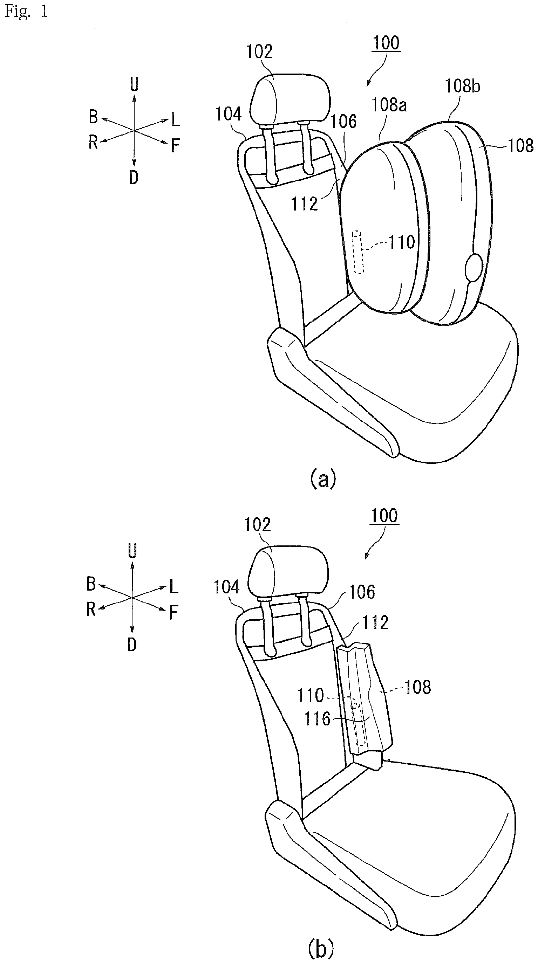

FIG. 1A and FIG. 1B are diagrams showing a side airbag apparatus 100 according to a first embodiment of the present invention. In FIG. 1A, the side airbag apparatus 100 and a vehicle seat (seat 102) in which the side airbag apparatus 100 is employed are shown from diagonally above right.

In FIG. 1A and all the other diagrams of the present application, a front-back direction with respect to an occupant seated in a normal position in the seat 102 is indicated by arrows F (forward) and B (back), a lateral direction with respect to the occupant is indicated by arrows L (left) and R (right), and a vertical direction with respect to the occupant is indicated by arrows U (up) and D (down). For example, in the present embodiment, since an airbag cushion (cushion 108) inflates and deploys on the left-hand side of the occupant seated in the normal position, the occupant side of the cushion 108 means the right-hand side of the cushion 108. Since the direction of the seat 102 can be changed inside a vehicle, the front-back and lateral directions with reference to the seat 102 do not necessarily match the front-back and lateral directions with reference to the vehicle.

FIG. 1A does not show an outermost layer and a seat pad (e.g., urethane material) of a seat back 104 of the seat 102 but only illustrates a seat frame 106. The seat frame 106 is a member constituting a framework built in the seat back 104.

In an emergency such as a vehicle collision, the side airbag apparatus 100 utilizes the cushion 108 to restrain the occupant seated in the seat from the side. The cushion 108 is formed into a bag by stacking a plurality of pieces of base fabric and sawing or adhering these pieces of fabric together, the base fabric constituting a surface of the cushion 108, or by means of spinning and weaving using a one-piece woven (OPW) technique. The cushion 108 is then reduced in size by being rolled or folded into a stored state, and then mounted in the seat 102.

The cushion 108 is attached, together with an inflator 110, to a side frame 112 of the seat frame 106 that is provided along a side portion of the seat back 104. The cushion 108 receives gas from the inflator 110 and inflates and deploys toward the side of the occupant (not shown) seated in the seat 102.

The cushion 108 of the present embodiment is roughly partitioned into two chambers, a pre-push chamber 108a as a base which is located on the occupant side, and a main chamber 108b located on the side opposite to the occupant. The pre-push chamber 108a is the first part that receives the gas from the inflator 110, and promptly inflates and deploys to push the occupant back to the center of the seat 102. The main chamber 108b inflates and deploys wide toward a space secured as a result of the pre-push chamber 108a pushing the occupant, to sufficiently restrain the occupant from the side.

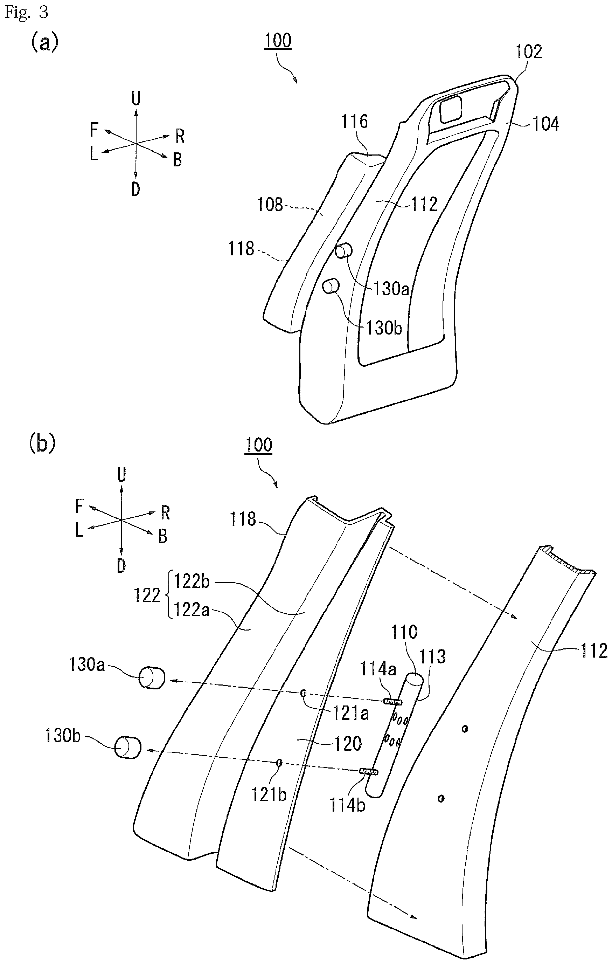

FIG. 1B is a diagram showing a state in which the cushion 108 of FIG. 1A is stored. As shown in FIG. 1B, the cushion 108 is rolled or folded into its stored state, and attached to the occupant side of the side frame 112 together with a holding plate 118 (see FIG. 3B) and the inflator 110.

The surface of the cushion 108 in the stored state is covered by a cover 116. In the present embodiment, the cover 116 is formed of a heat welded fabric and retains the stored state of the cushion 108. The cover 116 has a designated fragile portion (not shown) such as a section in which rims of the cover 116 are heat-welded, a slit, and a notch. The cover 116 releases the cushion 108 by allowing the fragile portion to rupture by inflation pressure of the cushion 108.

Note that, in addition to the heat welded fabric, the cover 116 can also be formed of the same material as the base fabric of the cushion 108, a nonwoven fabric, or the like. Although the cover 116 covers the entire cushion 108, the cover 116 can retain the cushion 108 by simply covering a designated part of the cushion 108.

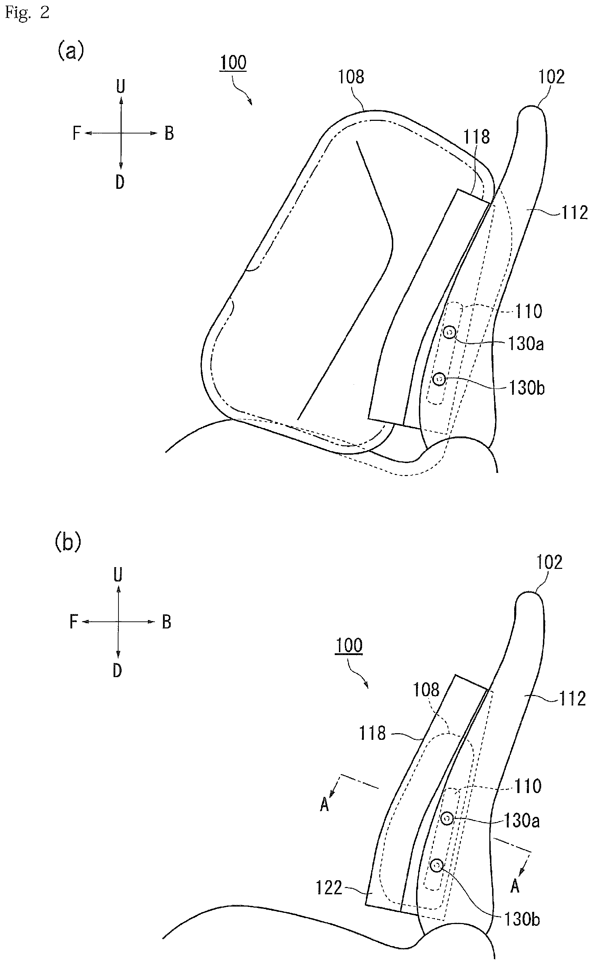

FIG. 2A and FIG. 2B are diagrams showing, from the side of the vehicle seat (seat 102), the cushion 108 in respective states shown in FIG. 1A and FIG. 1B. FIG. 2A illustrates the inflated and deployed cushion 108 of FIG. 1A. As shown in FIG. 2A, the cushion 108 of the present embodiment inflates and deploys forward from the side frame 112.

In the present embodiment, the holding plate 118 is attached to the side frame 112 together with the cushion 108 and the inflator 110. The holding plate 118 is a part with a certain degree of rigidity that supports the cushion 108 when the cushion 108 inflates and deploys. The holding plate 118 has a shape elongated along the vertical direction of the side frame 112, supporting the cushion 108 from the outside in a width direction of the seat 102.

FIG. 2B illustrates the cushion 108 in the stored state thereof shown in FIG. 1B. The cushion 108 in its stored state has a shape elongated along the holding plate 118. In this configuration, in the vertical direction of the side frame 112, the holding plate 118 is larger in size than the cushion 108 in its stored state (an extended part 122 in particular). With this configuration, the holding plate 118 can efficiently support the cushion 108 from the beginning of the inflation and deployment of the cushion 108.

FIG. 3A and FIG. 3B are perspective views showing respective states of the side airbag apparatus 100 of FIG. 2B.

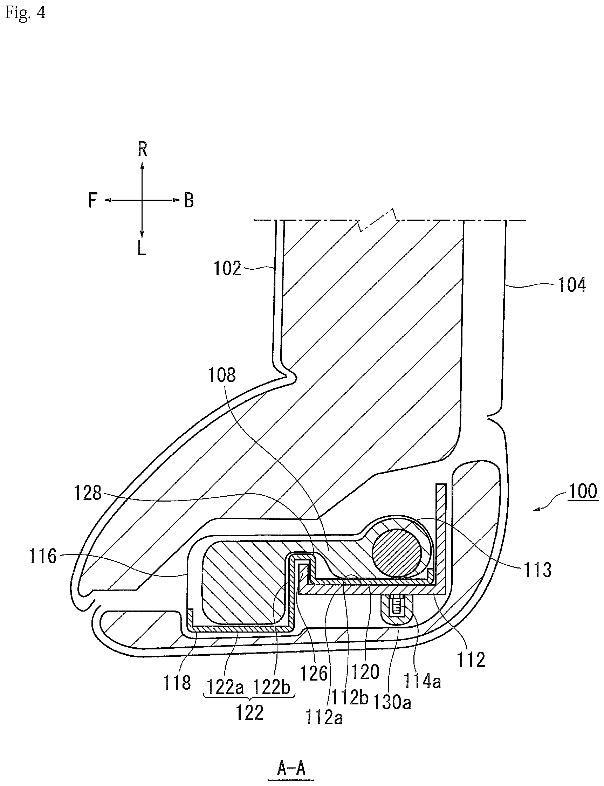

FIG. 3A shows the side airbag apparatus 100 of FIG. 2B from a rear left, upper side of the seat 102. In the present embodiment, interference prevention members 130a and 130b are provided on a side surface 112a (see FIG. 4) of the side frame 112 that is located outward in the width direction of the seat 102. The interference prevention members 130a and 130b are cap-like parts attached to tips of stud bolts 114a and 114b (see FIG. 3B) respectively, which are described hereinafter, and function to prevent other structures and the like from coming into contact with the stud bolts 114a and 114b.

FIG. 3B is an exploded view showing the side airbag apparatus 100 of FIG. 3A. FIG. 3B does not show the cover 116 (see FIG. 3A) covering the surface but illustrates the holding plate 118, the inflator 110, and the like.

The inflator 110 is a gas generating device, which is activated in response to an activation signal transmitted from the vehicle upon occurrence of an impact, and supplies gas to the inside of the cushion 108. The inflator 110 employed in the present embodiment includes a cylindrical (tubular) main body 113. In the present embodiment, the inflator 110 is embedded at the rear side of the inside of the cushion 108, with a longitudinal direction of the main body 113 aligned with the vertical direction.

Currently prevalent inflators include inflators that are filled with a gas generating agent and burn the gas generating agent to generate gas, inflators that are filled with compression gas and supply gas without generating heat, and hybrid inflators that use both combustion gas and compression gas. Any of these inflators can be used as the inflator 110.

In the main body 113 of the inflator 110, the stud bolts 114a and 114b are provided in two sections that are separated from each other in the longitudinal direction. The stud bolts 114a and 114b extend from the main body 113, pass through the cushion 108 (see FIG. 2A), the holding plate 118, and the side frame 112, and are fastened to the side frame 112.

As described above, the holding plate 118 is a part with a certain degree of rigidity that supports the cushion 108 when the cushion 108 inflates and deploys. For example, the holding plate 118 can be formed using a resin as a material thereof. The holding plate 118 can also be formed of not only a resin but also a metal. With either material, a configuration having an appropriate degree of rigidity can favorably be realized.

The holding plate 118 has a base part 120 that is formed in a planar shape along a side surface 112b (a surface on the far side in FIG. 3B. See FIG. 4 as well) of the side frame 112, the side surface 112b being located near the center of the seat back 104 in the width direction thereof (see FIG. 3A). The base part 120 is attached in such a manner as to be sandwiched between the cushion 108 (see FIG. 2A) and the side frame 112. Bolt holes 121a and 121b through which the stud bolts 114a and 114b pass are formed in the base part 120.

The extended part 122 is a part mainly supporting the main chamber 108b (see FIG. 1A). The extended part 122 extends outward from the base part 120 in the width direction of the seat back 104 (see FIG. 3A), in front of the side frame 112 of the cushion 108, and then further extends in a forward direction.

As described above, the interference prevention members 130a and 130b prevent other structures and the like from coming into contact with the stud bolts 114a and 114b. The interference prevention members 130a and 130b of the present embodiment can be realized as, for example, rounded, cap-like parts having internal threads. The interference prevention members 130a and 130b are fastened to the tips of the stud bolt 114a so as to cover the tips. The interference prevention members 130a and 130b can be formed using a resin as a material thereof so that a configuration with lower rigidity can be realized.

FIG. 4 is a cross-sectional view taken long A-A of the cushion 108 in the stored state shown in FIG. 2B. As shown in FIG. 4, the holding plate 118, the cushion 108, and the main body 113 of the inflator 110 are attached to the side surface 112b of the side frame 112 that is located near the center of the seat back 104 in the width direction thereof. The stud bolt 114a passes through the cushion 108, the holding plate 118, and the side frame 112 from the main body 113 and protrudes to the side surface 112a located outward in the width direction of the seat back 104.

The interference prevention member 130a is placed on the tip of the stud bolt 114a and therefore protrudes outward beyond the stud bolt 114a from the side frame 112. As described above, the interference prevention member 130a has a rounded shape and a curvature radius greater than that of the tip of the stud bolt 114a. For example, the interference prevention member 130a can be formed to have a curvature radius of 3.2 mm or more. According to this configuration, the interference prevention member 130a is favorable for being able to reduce the risk of damaging other structures even if the interference prevention member 130a comes into contact therewith.

Even in a case where the occupant comes into contact with a side surface of the seat back 104, the interference prevention member 130a can prevent the stud bolt 114a from coming into contact with the occupant through the outermost layer or seat pad of the seat 102, thereby enhancing the safety of the passenger compartment. Furthermore, since the rounded interference prevention member 130a covers the stud bolt 114a, the seat pad and the like can be prevented from being caught on the stud bolt 114a and the like when the cushion 108 inflates and deploys. Consequently, the cushion 108 can inflate and deploy by pushing away the seat pad and the like more smoothly.

Each part of the holding plate 118 is now described. A side wall region 122a is a part of the extended part 122 that extends in the front-back direction of the seat 102. The side wall region 122a is located on the side opposite to the inflator 110 (the side opposite to the occupant) when viewed from the side frame 112 in the lateral direction of the seat 102, and supports the cushion 108, which is to inflate and deploy, from the side opposite to the occupant, thereby enhancing the occupant restraining force of the cushion 108.

A rear wall region 122b is a part of the extended part 122 that extends outward in the lateral direction of the seat 102, from the base part 120 toward a rear end of the side wall region 122a. The rear wall region 122b supports the cushion 108 from behind when the cushion 108 inflates and deploys, to allow the cushion 108 to inflate and deploy promptly and smoothly.

The extended part 122 of the holding plate 118 may be provided in such a manner that the rear wall region 122b extends outward beyond the stud bolt 114a from the side frame 112 in the width direction of the seat back 104. With this configuration, the extended part 122 of the holding plate 118 can be used as well to prevent the interference of the other structures with the stud bolt 114a.

The holding plate 118 is formed so as to be engaged with the side frame 112 by the base part 120 and the rear wall region 122b. For example, a front edge 126 of the side frame 112 bends toward the inflator 110 (toward the occupant, in the present embodiment). A front end portion 128 of the base part 120 of the holding plate 118 bends first toward the occupant along the rear side of the front edge 126, and further bends above and past the front edge 126 to reach the rear wall region 122b. Therefore, a recessed region along the front edge 126 of the side frame 112 is formed between the base part 120 and the rear wall region 122b.

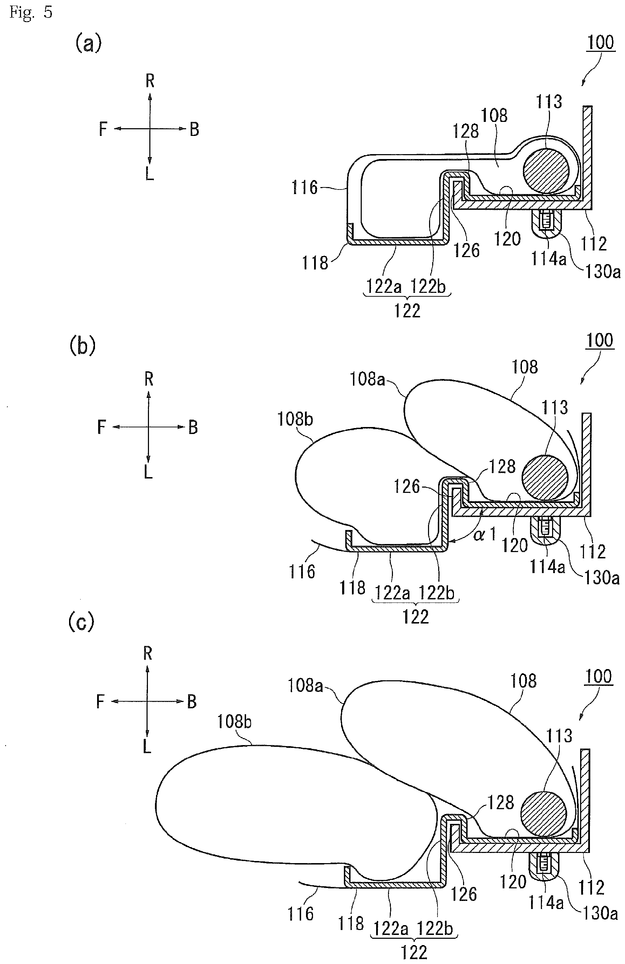

FIG. 5A to FIG. 5C are diagrams showing a process of inflating and deploying the cushion 108 of FIG. 4. FIG. 5A illustrates the cushion 108 in its stored state shown in FIG. 4. In the state shown in FIG. 5A, upon occurrence of an impact of the vehicle, a designated sensor detects the impact and sends an activation signal to the inflator 110, in response to which the inflator 110 is activated and supplies gas to the cushion 108.

FIG. 5B illustrates a state obtained immediately after the activation of the inflator 110 shown FIG. 5A. As shown in FIG. 5B, once the gas is supplied from the inflator 110, the pre-push chamber 108a of the cushion 108 starts inflating first. The pressure resulting from this inflation leads to rupture of the designated fragile portion (not shown) of the cover 116, such as a slit or a notch, thereby releasing the cushion 108 from the cover 116. Then, the main chamber 108b receives the gas from the pre-push chamber 108a, and inflates and deploys.

The rear wall region 122b comes into surface contact with a rear side of the main chamber 108b which is to inflate and deploy, to support the main chamber 108b from behind. The side wall region 122a comes into surface contact with the side of the inflating and deploying main chamber 108b opposite to the occupant in the front-back direction, to support the main chamber 108b from the side. The main chamber 108b receives a reaction force from the rear wall region 122b and the side wall region 122a and thereby inflates and deploys promptly and smoothly toward the front side of the seat 102.

FIG. 5C illustrates a state in which the cushion 108 of FIG. 5B further inflates and deploys. The occupant comes into contact with the inflated and deployed cushion 108 from the side. In this situation, the side wall region 122a of the holding plate 118 is present on the side of the main chamber 108b opposite to the occupant. Thus, in response to the reaction force from the side wall region 122a, the main chamber 108b can favorably absorb the load from the occupant and thereby sufficiently restrains the occupant.

As described above, according to the present embodiment, first of all, since the cushion 108 is attached to the side surface 112b of the side frame 112 that is located near the center of the seat back 104 in the width direction thereof, the cushion 108 can receive the reaction force from the side frame 112 when restraining the occupant. Moreover, the occupant restraining force of the main chamber 108b of the cushion 108 can be improved more efficiently by causing particularly the side wall region 122a of the holding plate 118 to support the main chamber 108b from the side. Even in the middle of inflation and deployment of the cushion 108, the main chamber 108b that is about to inflate and deploy is supported from behind by the rear wall region 122b, thereby enabling smooth inflation and deployment of the cushion 108 and consequently improvement of the occupant protection performance of the cushion 108.

As described above, the holding plate 118 is engaged with the front edge 126 of the side frame 112 due to the recessed region formed between the base part 120 and the rear wall region 122a. With this configuration, displacement of the holding plate 118 with respect to the side frame 112 can be prevented, thereby favorably retaining the position of the cushion 108 during inflation and deployment thereof. By taking advantage of this function as well, the side wall region 122a and the rear wall region 122b can support the main chamber 108b more efficiently.

In FIG. 5B where the holding plate 118 is viewed from above the seat 102, an angle 1, which is formed by the rear wall region 122b and the base part 120 sandwiching the side frame 112 therebetween, is preferably 90 or more. The rear wall region 122b having this configuration can apply to the main chamber 108b a reaction force at an angle toward the front of the seat 102 or an angle slightly toward the occupant in front. Thus, not only is it possible to inflate and deploy the main chamber 108b smoothly, but also the occupant protection performance thereof can be improved.

As described above, according to the side airbag apparatus 100 of the present embodiment, by mainly using the holding plate 118 and the interference prevention members 130a and 130b, the occupant protection performance and occupant restraining force of the cushion 108 can be improved and careful thought can be given to the safety of the passenger compartment.

### Second Embodiment

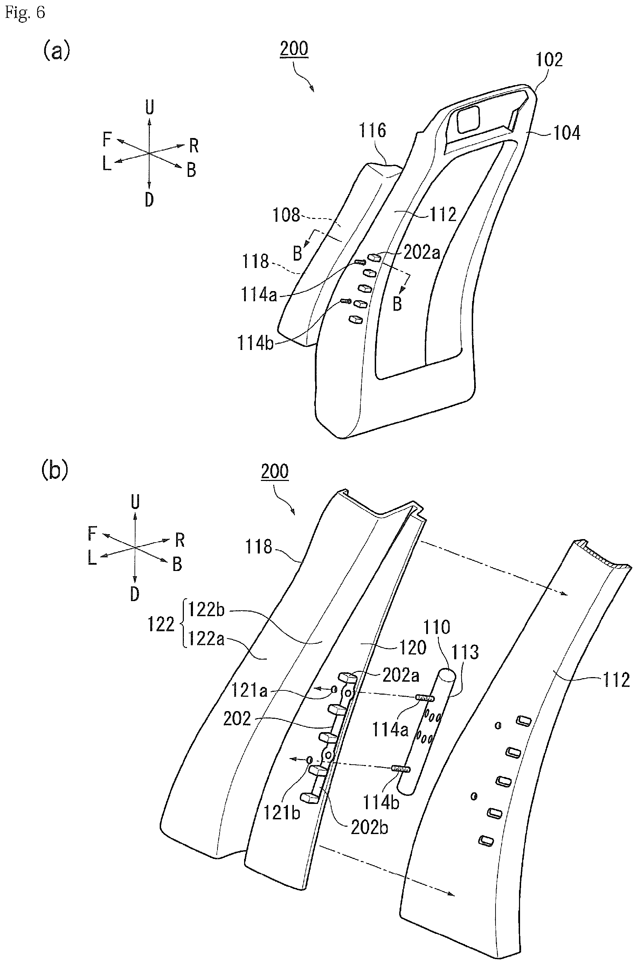

FIG. 6A and FIG. 6B are diagrams showing a side airbag apparatus 200 according to a second embodiment of the present invention. FIG. 6A illustrates the side airbag apparatus 200 in relation to FIG. 3A. The side airbag apparatus 200 is different from the configuration of the side airbag apparatus 100 of the first embodiment in terms of a configuration of an interference prevention member 202 (see FIG. 6B). In the description below, the constituent elements already described above are denoted by like reference numerals, to omit redundant explanations. In addition, constituent elements same as the constituent elements already described above may be denoted by different reference numerals but have the same configurations and functions.

The interference prevention member 202 (see FIG. 6B) includes a plurality of protrusions 202a formed along the vertical direction of the side frame 112. Each of the protrusions 202a protrudes from the holding plate 118, passes through the side frame 112, and protrudes outward beyond the stud bolts 114a and 114b from the side frame 112.

FIG. 6B is an exploded view of the side airbag apparatus 200 of FIG. 6A. As shown in FIG. 6B, the interference prevention member 202 is attached behind the bolt holes 121a and 121b of the base part 120 of the holding plate 118 by means of adhesion, a fixture, or the like. A total of five protrusions 202a of the interference prevention member 202 are formed across a range longer than the range connecting the bolt hole 121a and the bolt hole 121b. The protrusions 202a of the interference prevention member 202 are mainly made of a resin to have reduced rigidity, but a metal can be used in a base portion 202b other than the protrusions 202a.

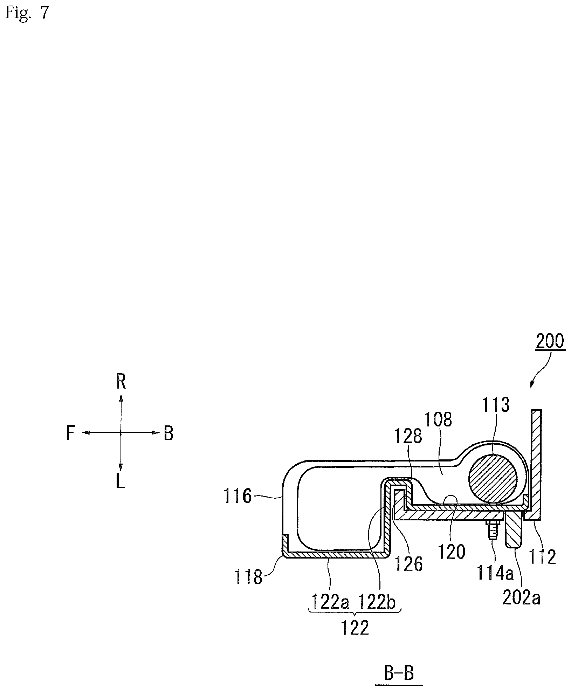

FIG. 7 is a cross-sectional view taken along B-B of the side airbag apparatus 200 of FIG. 6A. As shown in FIG. 7, the interference prevention member 202 (see FIG. 6B) is provided behind the stud bolt 114a of the side frame 112. The protrusions 202a pass through the side frame 112 from the vicinity of the rear side of the stud bolt 114a and protrude.

The protrusions 202a extend so as to protrude outward beyond the stud bolt 114a from the side frame 112 in the width direction of the seat back 104 (see FIG. 4). A tip of each protrusion 202a has a curvature radius greater than that of the tip of the stud bolt 114a, the curvature radius of the tip of each protrusion 202a being equal to or greater than 3.2 mm. Further, a flat region can be formed in a part of the tip of each protrusion 202a.

In addition to the interference prevention member 202 (see FIG. 6B), the extended part 122 of the holding plate 118, namely the rear wall region 122b in particular, is provided so as to extend beyond the stud bolt 114a from the side frame 112. In the present embodiment, since the rear wall region 122b and each protrusion 202a respectively protrude outward beyond the stud bolt 114a in front of and behind the stud bolt 114a, other structures and the like can efficiently be prevented from coming into contact with the tip of the stud bolt 114a.

According to the side airbag apparatus 200 of the present embodiment as well, in addition to improving the occupant protection performance and occupant restraining force of the cushion 108 by taking advantage of the holding plate 118, the interference prevention member 202 can be utilized to prevent the occupant and other structures from coming into contact with the tip of the stud bolt 114a, thereby enhancing the safety of the passenger compartment.

The present invention can be utilized in a side airbag apparatus provided in a vehicle seat.
- 100: Side airbag apparatus of first embodiment
- 102: Seat
- 104: Seat back
- 106: Seat frame
- 108: Cushion
- 108a: Pre-push chamber
- 108b: Main chamber
- 110: Inflator
- 112: Side frame
- 113: Main body of inflator
- 114a: Upper stud bolt
- 114b: Lower stud bolt
- 116: Cover
- 118: Holding plate
- 120: Base part of holding plate
- 121a: Upper bolt hole
- 121b: Lower bolt hole
- 122: Extended part of holding plate
- 122a: Side wall region
- 122b: Rear wall region
- 126: Front edge of side frame
- 128: Front end portion of base part
- 130a: Upper interference prevention member
- 130b: Lower interference prevention member
- 200: Side airbag apparatus of second embodiment
- 202: Interference prevention member of second embodiment
- 202a: Protrusions of interference prevention member
- 202b: Base portion of interference prevention member

## Claims

1. A side airbag apparatus (100,200) that restrains an occupant seated in a vehicle seat from a side of the occupant, the side airbag apparatus (100,200) comprising:
an airbag cushion that is in the shape of a bag and in a stored state in which the airbag cushion is rolled or folded; and
an inflator (110) attached together with the airbag cushion to a side frame (112) built in a side portion of a seat back of the vehicle seat,
wherein the inflator (110) has:
a main body (113) installed in a center of the side frame (112) in a width direction of the seat back (104); and
a stud bolt (114a,114b) passing through the side frame (112) from the main body (113) and protruding outward in the width direction, wherein
the side airbag apparatus (100,200) further comprising one or more interference prevention members (130a,130b,202) protruding outward in the width direction beyond the stud bolt (114a,114b) from the side frame (112) and having a curvature radius greater than that of a tip of the stud bolt (114a,114b), **characterising in that** the side airbag apparatus (100, 200) further comprising a designated holding plate (118) attached to the side frame (112) together with the airbag cushion and the inflator (110),
wherein the holding plate (118) includes:
a base part (120) formed between the airbag cushion and the side frame (112); and
an extended part (122) extending outward in the width direction from the base part (120) in front of the side frame (112) and further extending in a forward direction, and
the interference prevention member (130a,130b,202) is provided behind the stud bolt (114a,114b) in the side frame (112), wherein
the extended part (122) of the holding plate (118) extends outward in the width direction and protrudes beyond the stud bolt (114a,114b).

2. The side airbag apparatus (100,200) according to claim 1, wherein the interference prevention member (130a,130b,202) is installed to cover the tip of the stud bolt (114a,114b).

3. The side airbag apparatus (100,200) according to claim 1 or 2, wherein the interference prevention member (130a,130b,202) is installed in the base part of the holding plate (118) and passes through the side frame (112).

4. The side airbag apparatus (100,200) according to any one of claims 1 to 3, wherein the interference prevention member (130a,130b,202) includes a plurality of protrusions formed along a vertical direction of the side frame (112).

5. The side airbag apparatus (100,200) according to any one of claims 1 to 4, wherein the holding plate (118) is larger in size in the vertical direction of the side frame (112) than the airbag cushion in the stored state.

6. The side airbag apparatus (100,200) according to any one of claims 1 to 5, wherein the interference prevention member (130a,130b,202) is formed of a resin.

7. The side airbag apparatus (100,200) according to any one of claims 1 to 6, further comprising a cover that releasably covers at least a part of the airbag cushion in the stored state, the cover being formed of a heat welded fabric.

## Patentansprüche

1. Seitenairbagvorrichtung (100, 200), die einen in einem Fahrzeugsitz sitzenden Insassen von einer Seite des Insassen schützt, wobei die Seitenairbagvorrichtung (100, 200) Folgendes umfasst:
ein Airbagkissen, das die Form eines Beutels hat und sich in einem verstauten Zustand befindet, in dem das Airbagkissen aufgerollt oder gefaltet ist; und
einen Gasgenerator (110), der zusammen mit dem Airbagkissen an einem Seitenrahmen (112) befestigt ist, der in einem Seitenabschnitt einer Sitzlehne des Fahrzeugsitzes eingebaut ist,
wobei der Gasgenerator (110) Folgendes aufweist:
einen Hauptkörper (113), der in einer Mitte des Seitenrahmens (112) in einer Breitenrichtung der Sitzlehne (104) eingerichtet ist; und
eine Stiftschraube (114a, 114b), die von dem Hauptkörper (113) durch den Seitenrahmen (112) verläuft und in der Breitenrichtung nach außen vorsteht, wobei
die Seitenairbagvorrichtung (100, 200) ferner ein oder mehrere Interferenzvorbeugungselemente (130a, 130b, 202) umfasst, die in der Breitenrichtung über die Stiftschraube (114a, 114b) hinaus von dem Seitenrahmen (112) nach außen hervorstehen und einen Krümmungsradius aufweisen, der größer ist als der einer Spitze der Stiftschraube (114a, 114b), **dadurch gekennzeichnet, dass** die Seitenairbagvorrichtung (100, 200) ferner eine entsprechende Halteplatte (118) umfasst, die an dem Seitenrahmen (112) zusammen mit dem Airbagkissen und dem Gasgenerator (110) befestigt ist, wobei die Halteplatte (118) Folgendes beinhaltet:
einen Basisteil (120), der zwischen dem Airbagkissen und dem Seitenrahmen (112) ausgebildet ist; und
einen erstreckten Teil (122), der sich in der Breitenrichtung von dem Basisteil (120) vor dem Seitenrahmen (112) nach außen erstreckt und sich weiter in einer Vorwärtsrichtung erstreckt, und
wobei das Interferenzvorbeugungselement (130a, 130b, 202) hinter der Stiftschraube (114a, 114b) in dem Seitenrahmen (112) bereitgestellt ist, wobei sich der erstreckte Teil (122) der Halteplatte (118) in der Breitenrichtung nach außen erstreckt und über der Stiftschraube (114a, 114b) hervorsteht.

2. Seitenairbagvorrichtung (100.200) nach Anspruch 1, wobei das Interferenzvorbeugungselement (130a, 130b, 202) eingerichtet ist, um die Spitze der Stiftschraube (114a, 114b) abzudecken.

3. Seitenairbagvorrichtung (100, 200) nach Anspruch 1 oder 2, wobei das Interferenzvorbeugungselement (130a, 130b, 202) in dem Basisteil der Halteplatte (118) eingerichtet ist und durch den Seitenrahmen (112) verläuft.

4. Seitenairbagvorrichtung (100, 200) nach einem der Ansprüche 1 bis 3, wobei das Interferenzvorbeugungselement (130a, 130b, 202) mehrere Vorsprünge beinhaltet, die entlang einer vertikalen Richtung des Seitenrahmens (112) ausgebildet sind.

5. Seitenairbagvorrichtung (100, 200) nach einem der Ansprüche 1 bis 4, wobei die Halteplatte (118) in der vertikalen Richtung des Seitenrahmens (112) größer ist als das Airbagkissen in dem verstauten Zustand.

6. Seitenairbagvorrichtung (100, 200) nach einem der Ansprüche 1 bis 5, wobei das Interferenzvorbeugungselement (130a, 130b, 202) aus einem Harz ausgebildet ist.

7. Seitenairbagvorrichtung (100, 200) nach einem der Ansprüche 1 bis 6, die ferner eine Abdeckung umfasst, die in dem verstauten Zustand wenigstens einen Teil des Airbagkissens lösbar abdeckt, wobei die Abdeckung aus einem wärmegeschweißten Gewebe ausgebildet ist.

## Revendications

1. Dispositif de coussin de sécurité gonflable latéral (100, 200) qui retient un occupant assis dans un siège de véhicule à partir d'un côté de l'occupant, le dispositif de coussin de sécurité gonflable latéral (100, 200) comprenant :
un coussin de coussin de sécurité gonflable qui a la forme d'un coussin et qui est dans un état rangé dans lequel le coussin de coussin de sécurité gonflable est enroulé ou plié ; et
un gonfleur (110) attaché en conjonction avec le coussin de coussin de sécurité gonflable à un cadre latéral (112) construit dans une partie latérale d'un dossier de siège du siège de véhicule,
le gonfleur (110) possédant :
un corps principal (113) installé au centre du cadre latéral (112) dans une direction de largeur du dossier de siège (104) ; et
un goujon (114a, 114b) traversant le cadre latéral (112) depuis le corps principal (113) et faisant saillie vers l'extérieur dans le sens de la largeur,
le dispositif de coussin de sécurité gonflable latéral (100, 200) comprenant en outre un ou plusieurs éléments de prévention d'interférences (130a, 130b, 202) faisant saillie vers l'extérieur dans le sens de la largeur au-delà du goujon (114a, 114b) depuis le cadre latéral (112) et ayant un rayon de courbure supérieur à celui d'une pointe du goujon (114a, 114b),
**caractérisé en ce que** le dispositif de coussin de sécurité gonflable latéral (100, 200) comprend en outre une plaque de maintien désignée (118) attachée au cadre latéral (112) en conjonction avec le coussin de coussin de sécurité gonflable et le gonfleur (110),
la plaque de maintien (118) comportant :
une partie base (120) formée entre le coussin de coussin de sécurité gonflable et le cadre latéral (112) ; et
une partie étendue (122) s'étendant vers l'extérieur dans le sens de la largeur à partir de la partie base (120) devant le cadre latéral (112) et s'étendant en outre vers l'avant, et
l'élément de prévention d'interférences (130a, 130b, 202) étant prévu derrière le goujon (114a, 114b) dans le cadre latéral (112),
la partie étendue (122) de la plaque de maintien (118) s'étendant vers l'extérieur dans le sens de la largeur et faisant saillie au-delà du goujon (114a, 114b).

2. Dispositif de coussin de sécurité gonflable latéral (100, 200) selon la revendication 1, dans lequel l'élément de prévention d'interférences (130a, 130b, 202) est installé de manière à recouvrir la pointe du goujon (114a, 114b).

3. Dispositif de coussin de sécurité gonflable latéral (100, 200) selon la revendication 1 ou 2, dans lequel l'élément de prévention d'interférences (130a, 130b, 202) est installé dans la partie base de la plaque de maintien (118) et passe à travers le cadre latéral (112).

4. Dispositif de coussin de sécurité gonflable latéral (100, 200) selon l'une quelconque des revendications 1 à 3, dans lequel l'élément de prévention d'interférences (130a, 130b, 202) comporte une pluralité de saillies formées le long d'une direction verticale du cadre latéral (112).

5. Dispositif de coussin de sécurité gonflable latéral (100, 200) selon l'une quelconque des revendications 1 à 4, dans lequel la plaque de maintien (118) est plus grande dans la direction verticale du cadre latéral (112) que le coussin de coussin de sécurité gonflable à l'état rangé.

6. Dispositif de coussin de sécurité gonflable latéral (100, 200) selon l'une quelconque des revendications 1 à 5, dans lequel l'élément de prévention d'interférences (130a, 130b, 202) est formé d'une résine.

7. Dispositif de coussin de sécurité gonflable latéral (100, 200) selon l'une quelconque des revendications 1 à 6, comprenant en outre un élément de couverture qui recouvre de manière libérable au moins une partie du coussin de coussin de sécurité gonflable à l'état rangé, l'élément de couverture étant formé d'un tissu thermosoudé.
